# EUROPEAN PATENT SPECIFICATION

(11) **EP 0 756 163 B1**
(45) Date of publication and mention of the grant of the patent: **21.11.2001**
(21) Application number: 96305550.4
(22) Date of filing: 29.07.1996
(51) Int. Cl.: G01L 5/08

(54) **Belt tension gauge**
Riemenspannungsanzeigevorrichtung
Indicateur de la tension d'une courroie

(30) Priority: 28.07.1995 GB 9515532
(43) Date of publication of application: 29.01.1997
(73) Proprietor: Facom UK Limited, Cannock, Staffordshire WS11 3JR (GB)
(72) Inventor: Smith, David John, Poulton-Le-Fylde, Lancashire FY6 7SB (GB)
(74) Representative: Attfield, Donald James

(56) References cited:
- DE-A- 2 744 043
- GB-A- 2 162 329
- US-A- 1 771 340
- US-A- 2 528 883

## Description

This invention relates to an apparatus for measuring the tension in a flexible member.

Flexible members such as drive belts, chains, ropes, or cables, are well known to transmit forces, or to secure objects. When used in such a manner a tension will exist in the member. If such a tension is too high then damage to the member, or articles to which the member is in contact may occur. It is thus sometimes necessary to determine the tension within a member.

GB 2 098 747 discloses a device which measures the tension in a chain, the chain being used to allow a coal working machine to transverse a coal face. A length of chain is suspended between two hydraulic rams, the rams allowing slack chain to be removed from the system. The tension within the chain is determined by measuring the pressure of the hydraulic fluid within the rams. It is thus possible to determine whether the safe working limit of the chain has been exceeded.

The system disclosed in GB 2 098 747 is a fixed system and can not be used to simply determine the tension in a flexible member, it merely allows the tension of one particular member to be monitored.

German Patent publication No. 2 744 043 discloses a device which measures the tension in flexible members such as drive belts in vehicle engines and has the display means separated from the pressure applying means to allow easy reading of the display despite the position of the pressure applying means. The measurement is taken by applying pressure to the flexible member to cause a predetermined amount of movement, the pressure is applied by means of a hydraulic piston. The amount of pressure required to move the flexible member over the predetermined distance is recorded and displayed.

The present invention provides a portable device which may be used to measure the tension of flexible members in situ.

According to the present invention we provide a device for measuring the tension in an elongate flexible member comprising first means for releasably attaching the device to the flexible member, second means for applying pressure to deflect the member in a direction normal to the longitudinal axis thereof, third means for acting on said second means to provide a pressure thereon and fourth means for measuring the pressure when said second means is advanced by a predetermined amount against said member; wherein the first means is rotatably mounted to the second means.

An advantage of rotatably mounting the first means is that the device is easier to use, being easier to attach to flexible members.

Such a device allows the tension in a flexible member to be determined quickly, easily and with the member in situ.

Preferably the third means comprises a fluid controlled piston and cylinder arrangement in communication with said second means and including a reservoir for the fluid. A means may be provided for displacing a predetermined volume of fluid from the reservoir to provide said pressure. An advantage of such a third means is that displacing a known amount of fluid from the reservoir, with the displacing means, will result in the second means being advanced by a predetermined extent.

The second means may comprise a piston moveable in a cylinder under the influence of the fluid, such as hydraulic fluid. The pressure applied to the fluid to move the piston by a predetermined amount being measured. The pressure of the fluid is related to the tension of the flexible member. Therefore, measuring the fluid pressure the tension of the flexible member can be determined.

Preferably the first means further comprises an elongate member substantially parallel to the major axis of the elongate member and including means to support the member on the flexible member. Such an elongate member allows the flexible member to be held in a fixed relationship to the second means.

The first means may comprise a guide element for the flexible member and at least one element extending at right angles thereto and exposed to said second means whereby the flexible member rests on the guide element between the second means and said one element. Thus, the tension measuring device will be maintained on the flexible member whilst the tension of the flexible member is being measured.

In the third means the means for displacing a predetermined volume of fluid from the reservoir may include a piston mounted on an end portion of a helically threaded member. The piston can be advanced into the reservoir by a predetermined amount by rotating the helically threaded member. An advantage of a piston mounted in such a manner is that the device is mechanically simple requiring few components.

The fourth pressure measuring means preferably communicates with the reservoir of the third means.

One embodiment of our invention is disclosed in the accompanying drawings in which:-
**Figure 1** is a cross-sectional view of a tension measuring device according to the present invention; and
**Figure 2** shows a view of a first means for attaching to an elongate flexible member.

An hydraulic tension measuring device 2 is shown releasably attached to an elongate flexible member 4, in this case a rectangular section belt.

A first means 6 is provided for attaching to the belt 4, and can be seen most clearly in Figure 2. The first means comprises an elongate base plate 8 from which protrude, perpendicularly to the base plate 8, three substantially rectangular members 10,12,14. A first two of the rectangular members 12,14 protrude from opposite end portions of a first side 16 of the elongate base plate 8. The third rectangular member 10 protrudes from substantially the centre portion of a second side 18 of the elongate base plate 8. The first side 16 and the second side 18 of the elongate base plate 8 being parallel to each other and on opposite sides of the base plate 8. The third rectangular member 10 has a hole 20 through it. The three rectangular members 10,12,14 are arranged so that the belt 4 can be laid along the base plate 8 with third rectangular member 10 one side of the belt and the first two rectangular members 12,14 on the other side of the belt 4.

A second means 22 is provided for applying pressure to the belt, and comprises an hydraulic cylinder 24 in which there is disposed a piston 26. A rod 28 is attached to a first side of the piston 26 and passes through a first end wall of the hydraulic cylinder 24. Mounted on the end portion of the rod 28, external of the hydraulic cylinder 24, is a substantially hemispherical member 29. At a second end wall of the hydraulic cylinder 24 is an opening allowing hydraulic fluid to enter or leave the hydraulic cylinder 24.

A third means 30 is provided to generate hydraulic pressure. The third means comprises a flexible, inextensible tubular member 32 and a second hydraulic cylinder 34, in which is disposed a second piston 36. A helically threaded shaft 38 passes through a first end wall of the second hydraulic cylinder 34, which is threaded in a complementary manner to the shaft. The end portion of the shaft attaches to the second piston 36. A second end wall of the second hydraulic cylinder 34 has an opening allowing hydraulic fluid to pass into and from the second cylinder 34. The tubular member 32 connects to the outside of the second end wall of the second hydraulic cylinder 34 so that fluid passing into or from the cylinder passes into the tubular member 32. A hole 39 passes through the side wall of the second cylinder 34 in the end portion toward the second end wall. The shaft 38 may be fitted with a pointer (not shown) to ensure that the shaft may be rotated by a known amount.

A fourth means 40 is provided which measures pressures and comprises a pressure gauge as known to a man skilled in the art.

The first end wall of the hydraulic cylinder 24 is rotatably mounted on the third rectangular member 10 of the first means so that the cylinder 24 is disposed away from the base plate 8 and the rod 28 passes through the hole 20 in the third rectangular member 10. Consequently the hemispherical member 30 lies above the base plate 8. The first means 6 can rotate about the longitudinal axis of the hydraulic cylinder 24, which makes it easier to attach the first means 6 to the flexible member 4.

The tubular member 32 of the third means 30 connects to the second end wall of the hydraulic cylinder of the second means 22, allowing fluid passing through the tubular member 32 to communicate with the opening in the second end wall.

The fourth means 40 attaches to the side wall of the second cylinder 34 so that the pressure of fluid passing through the hole 38 in the side wall is measured.

In operation a belt 4 is passed into the first means as described herein above. The shaft 38 is rotated in a clockwise manner, advancing the second piston 36 toward the second end wall of the second hydraulic cylinder 34. Thus the hemispherical end portion 30 is forced toward the belt 4 due to the incompressible hydraulic fluid being passed between the two cylinders. The shaft 38 is rotated until the pressure, as indicated by the fourth means 40, reads a predetermined value, ensuring that the effects of air bubbles and barometric pressure have been removed. The pointer on the shaft 38 is then reset and the shaft 38 is then rotated by a further 360°. Such a rotation will cause the hemispherical end portion 30 to advance by a known amount, as the fluid is incompressible and tubular member 32 is inextensible. The pressure recorded by the fourth means 40 is then noted, from which the tension in the belt can be determined.

When a tension is being measured the belt 4 will be held between the hemispherical end portion 30 and the first two rectangular members 12,14. To release the belt the shaft 38 is rotated anticlockwise, releasing the pressure in the system and consequently releasing the belt 4.

## Claims

1. A device (2) for measuring the tension in an elongate flexible member (4) comprising:
first means (6) for releasably attaching the device (2) to the flexible member (4);
second means (22) for applying pressure to deflect the member (4) in a direction normal to the longitudinal axis thereof;
third means (30) for acting on said second means (22) to provide a pressure thereon; and
fourth means (40) for measuring the pressure when said second means (22) is advanced by a predetermined amount against said member (4); **characterised in that** the first means (6) is rotatably mounted to the second means (22).

2. A device (2) for measuring the tension in an elongate flexible member (4) according to Claim 1 wherein the third means (30) comprises a fluid controlled piston (36) and cylinder (34) arrangement in communication with said second means (22) and includes a reservoir (32) for the fluid.

3. A device (2) for measuring the tension in an elongate flexible member (4) according to Claim 2 including means (38) for displacing a predetermined volume of fluid from a reservoir (32) to provide said pressure.

4. A device (2) for measuring the tension in an elongate flexible member (4) according to any one of Claims 1-3 wherein said second means (22) comprises a piston (26) movable in a cylinder (24) under the influence of the fluid.

5. A device (2) for measuring the tension in an elongate flexible member (4) according to Claim 4 wherein the fluid is hydraulic fluid.

6. A device (2) for measuring the tension in an elongate flexible member (4) according to any one of Claims 1-5 wherein said first means (6) comprises a guide element (8) for the flexible member (4) and at least one element (12, 14) extending at right angles thereto and opposed to said second means (22) whereby the flexible member (4) rests on the guide means between said second means (22) and said element (12, 14).

7. A device (2) for measuring the tension in an elongate flexible member (4) according to Claim 6 wherein a member (10) is secured to said guide element (8) and is substantially parallel to said element (12, 14) whereby said flexible member (4) rests on said guide element (8) between said member (10) and said element (12, 14).

8. A device (2) for measuring tension in an elongate flexible member (4) according to any one of the preceding Claims wherein said fourth means (40) communicates with said reservoir (32) of said third means (30).

## Patentansprüche

1. Vorrichtung (2) zum Messen der Spannung in einem länglichen flexiblen Teil (4), das folgendes aufweist:
ein erstes Mittel (6) zur entfernbaren Befestigung der Vorrichtung (2) an dem flexiblen Teil (4);
ein zweites Mittel (22) zur Druckausübung, um das Teil (4) in einer senkrecht zu der Längsachse desselben verlaufenden Richtung abzulenken;
ein drittes Mittel (30) zur Einwirkung auf das zweite Mittel (22), um darauf einen Druck auszuüben; und
ein viertes Mittel (40) zum Messen des Druckes, wenn das zweite Mittel (22) um einen zuvor festgelegten Betrag gegen das Teil (4) vorgerückt wird;
**dadurch gekennzeichnet, daß**
das erste Mittel (6) drehbar an dem zweiten Mittel (22) angebracht ist.

2. Vorrichtung (2) zum Messen der Spannung in einem länglichen flexiblen Teil (4) nach Anspruch 1,
**dadurch gekennzeichnet, daß**
das dritte Mittel (30) eine mit dem zweiten Mittel (22) in Verbindung stehende Anordnung aus einem flüssigkeitsgesteuerten Kolben (36) und einem Zylinder (34), und einen Tank (32) für die Flüssigkeit aufweist.

3. Vorrichtung (2) zum Messen der Spannung in einem länglichen flexiblen Teil (4) nach Anspruch 2,
**dadurch gekennzeichnet, daß**
Mittel (38) zur Verlagerung eines zuvor festgelegten Volumens an Flüssigkeit von einem Tank (32) vorhanden sind, um den Druck bereitzustellen.

4. Vorrichtung (2) zum Messen der Spannung in einem länglichen flexiblen Teil (4) nach einem beliebigen der Ansprüche 1-3,
**dadurch gekennzeichnet, daß**
das zweite Mittel (22) einen unter dem Einfluß der Flüssigkeit in einem Zylinder (24) bewegbaren Kolben (26) aufweist.

5. Vorrichtung (2) zum Messen der Spannung in einem länglichen flexiblen Teil (4) nach Anspruch 4,
**dadurch gekennzeichnet, daß**
die Flüssigkeit eine Hydraulikflüssigkeit ist.

6. Vorrichtung (2) zum Messen der Spannung in einem länglichen flexiblen Teil (4) nach einem beliebigen der Ansprüche 1-5,
**dadurch gekennzeichnet, daß**
das erste Mittel (6) ein Führungselement (8) für das flexible Teil (4) und mindestens ein Element (12,14) aufweist, das sich im rechten Winkel zu demselben erstreckt und dem zweiten Mittel (22) gegenüberliegt, wobei das flexible Teil (4) auf dem Führungsmittel zwischen dem zweiten Mittel (22) und dem Element (12,14) ruht.

7. Vorrichtung (2) zum Messen der Spannung in einem länglichen flexiblen Teil (4) nach Anspruch 6,
**dadurch gekennzeichnet, daß**
ein Teil (10) an dem Führungselement (8) befestigt und im wesentlichen parallel zu dem Element (12, 14) angeordnet ist, wodurch das flexible Teil (4) auf dem Führungsmittel zwischen dem Teil (10) und dem Element (12,14) verbleibt.

8. Vorrichtung (2) zum Messen der Spannung in einem länglichen flexiblen Teil (4) nach einem beliebigen der vorangegangenen Ansprüche,
**dadurch gekennzeichnet, daß**
das vierte Mittel (40) mit dem Tank (32) des dritten Mittels (30) verbunden ist.

## Revendications

1. Dispositif (2) pour mesurer la tension d'un élément flexible allongé (4) comprenant :
des premiers moyens (6) pour attacher de manière détachable le dispositif (2) à l'élément flexible (4) ;
des deuxièmes moyens (22) pour appliquer une pression afin de dévier l'élément (4) dans une direction perpendiculaire par rapport à l'axe longitudinal de celui-ci ;
des troisièmes moyens (30) pour agir sur lesdits deuxièmes moyens (22) afin de fournir une pression sur ceux-ci ; et
des quatrièmes moyens (40) pour mesurer la pression lorsque lesdits deuxièmes moyens (22) sont avancés d'un degré déterminé contre ledit élément (4) ; **caractérisé en ce que** les premiers moyens (6) sont montés de manière rotative sur les deuxièmes moyens (22).

2. Dispositif (2) pour mesurer la tension d'un élément flexible allongé (4) selon la revendication 1, dans lequel les troisièmes moyens (30) comprennent un arrangement formant piston contrôlé par un fluide (36) et formant cylindre (34) en communication avec lesdits deuxièmes moyens (22) et comprennent un réservoir (32) pour le fluide.

3. Dispositif (2) pour mesurer la tension d'un élément flexible allongé (4) selon la revendication 2, comprenant des moyens (38) destinés à déplacer un volume de fluide prédéterminé à partir d'un réservoir (32) afin de fournir ladite pression.

4. Dispositif (2) pour mesurer la tension d'un élément flexible allongé (4) selon l'une quelconque des revendications 1 à 3, dans lequel lesdits deuxièmes moyens (22) comprennent un piston (26) pouvant être déplacé dans un cylindre (24) sous l'influence du fluide.

5. Dispositif (2) pour mesurer la tension d'un élément flexible allongé (4) selon la revendication 4, dans lequel le fluide est un fluide hydraulique.

6. Dispositif (2) pour mesurer la tension d'un élément flexible allongé (4) selon l'une quelconque des revendications 1 à 5, dans lequel lesdits premiers moyens (6) comprennent un élément de guidage (8) pour l'élément flexible (4) et au moins un élément (12, 14) s'étendant à angle droit par rapport à celui-ci et faisant face auxdits deuxièmes moyens (22), moyennant quoi l'élément flexible (4) repose sur les moyens de guidage entre lesdits deuxièmes moyens (22) et ledit élément (12, 14).

7. Dispositif (2) pour mesurer la tension d'un élément flexible allongé (4) selon la revendication 6, dans lequel un élément (10) est fixé sur ledit élément de guidage (8) et est sensiblement parallèle audit élément (12, 14), moyennant quoi ledit élément flexible (4) repose sur ledit élément de guidage (8) entre ledit élément (10) et ledit élément (12, 14).

8. Dispositif (2) pour mesurer la tension d'un élément flexible allongé (4) selon l'une quelconque des revendications précédentes, dans lequel lesdits quatrièmes moyens (40) communiquent avec ledit réservoir (32) desdits troisièmes moyens (30).
